# EUROPÄISCHE PATENTANMELDUNG

(11) **EP 0 645 545 A1**
(43) Veröffentlichungstag der Anmeldung: **29.03.1995**
(21) Anmeldenummer: 94109130.8
(22) Anmeldetag: 15.06.1994
(51) Int. Cl.: F16B 7/04

(54) **Spannschloss**

(30) Priorität: 27.08.1993 DE 4328859
(71) Anmelder: INTUR SYSTEM-PROFIL GmbH + CO., D-49744 Geeste-Dalum (DE)
(72) Erfinder: Schomakers, Franz, D-49744 Geeste-Dalum (DE)
(74) Vertreter: Busse & Busse Patentanwälte

(57) **Zusammenfassung**

Die Erfindung bezieht sich auf ein Spannschloß zum Verbinden eines mit einer Rastausnehmung versehenen Hohlprofils 2 mit einem einen Klemmrandansatz aufweisenden Trägerelement, insbesondere zum Verbinden von Hohlprofilstangen mit hinterschnittenen Nuten als Klemmrandansätze aufweisenden Vertikalstützen von auf- und abbaubaren Gestellen, mit einer in das Hohlprofil einführbaren und über einen Mitnehmer 13 in einer Rastausnehmung 3 des Hohlprofils arretierbaren, durch eine Drehbewegung des Mitnehmers 13 aus einer Spannausgangslage in eine Spannendstellung überfahrbaren Klemmfeder 5 mit in der Spannendstellung den Klemmrandansatz hintergreifenden Klemmfingern 6,7, die im Verlaufe der Spannbewegung der Klemmfeder 5 in eine quer zur Klemmfederlängsachse gerichtete Spannspreizstellung bewegbar sind. Um insbesondere ein relativ einfach bauendes Teil mit sicherer Arretierung in der Montagestellung vorliegen zu haben, ist zwischen den Klemmfingern 6,7 der Klemmfeder 5 ein relativ zu dieser translatorisch bewegbarer, zumindest ein Federzungenelement 11 aufweisender Schieber 10 angeordnet. Über den Schieber 10 sind die Klemmfinger 6,7 aus ihrer Spannausgangsstellung im Verlaufe der Schieberbewegung in ihre Spannspreizstellung überführbar. Die Klemmfeder 5 und der Schieber 10 weisen jeweils eine zumindest eine Kurvenbahn umfassende Mitnehmerkulisse 16,16.1,16.2.16.3,16.4,19 auf, in die zumindest ein am Mitnehmer 13 festgelegtes Mitnehmerstück 17,17.1., 17.2,17.3,17.4,18.,18.1 zur Bewegungskopplung eingreift. Die Klemmfeder 5 weist darüber hinaus eine dem Federzungenelement 11 zugeordnete Formausnehmung 12 auf und ist von dem Federzungenelement 11 im Verlaufe der Schieberbewegung zur Spannschloßarretierung in dem Hohlprofil 2 überfahrbar

## Beschreibung

Die Erfindung bezieht sich auf ein Spannschluß zum Verbinden eines mit einer Rastausnehmung versehenen Hohlprofils mit einem einen Klemmrandansatz aufweisenden Trägerelement, insbesondere zum Verbinden von Hohlprofilstangen mit hinterschnittene Nuten als Klemmrandansätze aufweisenden Vertikalstützen von auf- und abbaubaren Gestellen, mit einer in das Hohlprofil einführbaren und über einen Mitnehmer in der Rastausnehmung des Hohlprofils arretierbaren, durch eine Drehbewegung des Mitnehmers aus einer Spannausgangslage in eine Spannendstellung überführbaren Klemmfeder mit in der Spannendstellung den Klemmrandansatz hintergreifenden Klemmfingern, die im Verlaufe der Spannbewegung der Klemmfeder in eine quer zur Klemmfederlängsachse gerichtete Spannspreizstellung bewegbar sind.

Aus der EP-A-0 059 463 ist beispielsweise ein Spannschloß der vorgenannten Art bekannt, bei dem der Mitnehmer als Exzenter ausgebildet ist, der eine lochförmige Ausnehmung des für dieses Spannschloß erforderlichen Gehäuse durchgreift.

Um das Spannschloß insgesamt mit seinem Gehäuse in das Hohlprofil ein- und ausbringen zu können, ist dieser Exzenter über die Klemmfeder eindrückbar in der Spannausgangsstellung ausgebildet, so daß er nach Eindrücken mitsamt seinem Gehäuse in das Innere des Hohlprofiles einzuführen ist. In dem Hohlprofil ist eine in der Montagestellung den Mitnehmer übergreifende Hohlprofilausnehmung vorgesehen, so daß er unter Einfluß der Federkraft der Klemmfeder in der Hohlprofilausnehmung verrastet, um eine Verbindung des Spannschlosses mit dem Hohlprofil sicherzustellen.

In der Spannendstellung der Klemmfeder, in der über den Exzenter des Mitnehmers das hakenförmige Ende des Klemmfingerteils und der Klemmfeder hinter dem Klemmrandansatz des Trägerelementes verrastet ist, ist der Mitnehmer über ein gehäuseseitiges Stützelement an einem Eindrücken gehindert. Das Klemmfingerteil bzw. die Klemmfeder hat ein mit gehäuseseitigen Einbuchtungen zusammenwirkende Schrägflächen, um im Verlaufe der Mitnehmerbewegung eine quer zur Gehäuselängsachse ausgerichtete Spannspreizbewegung ausführen zu können. Dies stellt an die Paßgenauigkeit der Teile erhöhte Anforderungen. Demzufolge ist der Exzenter des Mitnehmerelementes sehr genau zu fertigen, um mit einem beherrschbaren Kraftaufwand den nur einseitig gelagerten Exzenter sicher zur Festlegung des Spannschlosses und damit des Hohlprofils an dem Trägerelement benutzen zu können. Die aufzubringenden Kräfte für das manuelle Vespannen dieses Spannschlosses sind dennoch erheblich. Durch das Erfordernis von Gehäuse, Gehäusestützelemente u.dgl. fordert darüber hinaus dieses bekannte Spannschloß eine nicht unerhebliche Anzahl von Teilen, die nur mit einem erheblichen Fertigungsaufwand herzustellen sind.

Es ist Aufgabe der vorliegenden Erfindung, ein Spannschloß der eingangs genannten Art zu schaffen, mit dem ein Hohlprofil sicher an einem Trägerelement festlegbar ist, das jedoch in handhabungstechnisch einfacher Weise zu betätigen ist. Gleichfalls soll die Zahl der notwendigen bauaufwendigen Einzelteile verringert sein.

Zur Lösung dieser Aufgabe zeichnet sich das Spannschloß der eingangs genannten Art dadurch aus, daß zwischen den Klemmfingern der Klemmfeder ein relativ zu dieser translatorisch bewegbarer, zumindest ein Federzungenelement aufweisender Schieber angeordnet ist, über den die Klemmfinger aus ihrer Spannausgangsstellung im Verlaufe der Schieberbewegung in ihre Spannspreizstellung überführbar sind, daß die Klemmfeder und der Schieber jeweils eine eine Kurvenbahn umfassende Mitnehmerkulisse aufweisen, in die zumindest ein am Mitnehmer festgelegtes Mitnehmerstück zur Bewegungskopplung eingreift, und daß die Klemmfeder eine dem Federzungenelement zugeordnete Formausnehmung aufweist sowie von diesem im Verlaufe der Schieberbewegung zur Spannschloßarretierung in dem Hohlprofil überfahrbar ist.

Bei dem Spannschloß nach der Erfindung kann das Mitnehmerelement auf exzenterförmige Ansätze völlig verzichten. Zudem ist das Vorsehen eines Spannschloßgehäuses mit beispielsweise Stützansätzen u.dgl. völlig entbehrlich. Vielmehr ist in baulich einfacher Weise entweder am Mitnehmer oder an der Klemmfeder in einfachster Ausbildung eine Mitnehmerkulisse beispielsweise in Gestalt einerentsprechend ausgebildeten Formausnehmung vorzusehen, in die Mitnehmerbolzen u.dgl. zur Bewegungskopplung eingreifen. Über den Schieber ist mittels der Mitnehmer das Spannschloß derart zu aktivieren, daß die Klemmfinger in ihre Verrastungs- bzw.

Spannstellung zu überführen sind. Dabei überfährt das endseitig am Schieber ausgebildete Zungenelement die Klemmfeder, so daß durch dieses Federzungenelement das Spannschloß in dem Hohlprofil zu arretieren ist. In der Spannausgangslage ist das Federzungenelement in die zugeordnete Formausnehmung der Klemmfeder einzudrücken, so daß in baulich und montagetechnisch einfacher Weise das Spannschloß insgesamt in das Hohlprofil nach Einfedern des Federzungenelements in die Formausnehmung ein- und auszubringen ist. Die Anzahl der notwendigen Einzelteile ist dabei wesentlich verringert.

Über den Mitnehmer und die eine Kurvenbahn aufweisende Mitnehmerkulisse ist eine Drehbewegung des Mitnehmers sicher in eine translatorische Spannbewegung des Schiebers zu überführen. Die dazu notwendigen Teile, insbesondere auch Mitnehmerbolzen, können handelsübliche Bolzen mit entsprechenden Abmessungen sein. Mitnehmerkulissen, Formausnehmungen, Ausstanzungen oder auch Ausfräsungen zur Darstellung der Mitnehmerkulisse bzw. der Kurvenbahn sind nur mit geringem Fertigungsaufwand herzustellen. Darüber hinaus sind die zur Verrastung aufzubringenden Kräfte gegenüber den Exzenterscheiben bekannter Schlösser wesentlich verringert.

Bevorzugtermaßen hat das Spannschloß gegenläufig quer zur Klemmfederlängsachse bewegbare Klemmfinger, die zudem noch gleichfalls durch den Schieber auslenkbar sind und das Spannschloß in der Blockierendstellung in dem Hohlprofil sichern bzw. arretieren oder festklemmen.

Wesentliche weitere Ausgestaltungen des Spannschlosses nach der Erfindung ergeben sich aus den Ansprüchen 2 bis 17.

Zur weiteren Erläuterung der Erfindung wird auf die Zeichnung und die nachfolgende Beschreibung verwiesen. In der Zeichnung zeigen:
- Fig. 1: in einer schematischen Seitenansicht ein erstes Ausführungsbeispiel eines Spannschlosses nach der Erfindung in der Spannausgangsstellung;
- Fig. 2: eine Draufsicht auf das Ausführungsbeispiel nach Fig. 1;
- Fig. 3: eine Ansicht von unten auf das Ausführungsbeispiel nach Fig. 1;
- Fig. 4: eine Vorderansicht auf das Ausführungsbeispiel nach Fig. 1;
- Fig. 5 bis 8: zu Fig. 1 bis 5 analoge Darstellungen des Ausführungsbeispiels nach Fig. 1, jedoch in der Spannendstellung der Klemmfeder;
- Fig. 9: eine geschnittene Seitenansicht des Mitnehmers des Ausführungsbeispiels nach Fig. 1 bzw. Fig. 5;
- Fig. 10: eine Schnittdarstellung gemäß der Schnittlinie X-X in Fig. 9;
- Fig. 11: eine Einzeldarstellung der Klemmfeder;
- Fig. 12: eine Draufsicht auf die Klemmfeder gemäß Fig. 11;
- Fig. 13: eine Ansicht von unten auf das Ausführungsbeispiel nach Fig. 11;
- Fig. 14: der Schieber für eine Klemmfeder nach dem Ausführungsbeispiel nach Fig. 11 in einer Seitenansicht;
- Fig. 15: eine Ansicht von unten auf den Schieber nach Fig. 14;
- Fig. 16: eine Seitendarstellung eines alternativen Ausführungsbeispiels eines Spannschlosses nach der Erfindung in der Spannausgangsstellung ;
- Fig. 17: eine Draufsicht auf das Ausführungsbeispiel nach Fig. 16;
- Fig. 18: eine Ansicht von unten auf das Ausführungsbeispiel nach Fig. 16;
- Fig. 19: eine Ansicht von hinten des Ausführungsbeispieles nach Fig. 16;
- Fig. 20: ein Einzeldarstellung (Seitenansicht) des Mitnehmers des Ausführungsbeispiels nach Fig. 16;
- Fig. 21: eine Schnittdarstellung der Schnittlinie XXI-XXI in Fig. 20; jeweils in der Spannausgangsstellung der Klemmfeder;
- Fig. 22 bis 27: jeweils in der Spannendstellung der Klemmfeder analoge Darstellungen zu den Fig. 16 bis 21 des Ausführungsbeispiels nach Fig. 16;
- Fig. 28: die Klemmfeder des Ausführungsbeispiels nach Fig. 16 bzw. 22 in einer Seitenansicht;
- Fig. 29: eine Draufsicht auf die Klemmfeder nach Fig. 28;
- Fig. 30: eine Ansicht von unten auf das Ausführungsbeispiel von Fig. 28;
- Fig. 31: ein Schieber für eine Klemmfeder nach Fig. 28 in einer Seitenansicht;
- Fig. 32: eine Draufsicht auf den Schieber nach Fig. 31 und
- Fig. 33: eine Ansicht von unten auf den Schieber gemäß Ausführungsbeispiel nach Fig. 31.

Das in der Zeichnung allgemein mit 1 bezifferte Spannschloß dient zur Verbindung eines gestrichelt angedeuteten Hohlprofiles 2 mit einem nicht dargestellten Stützprofil, das Klemmrandansätze haben soll.

Das Hohlprofil 2 hat eine Rastausnehmung 3 und eine vordere Öffnung 4, über die das Spannschloß in das Hohlprofil einzuführen ist.

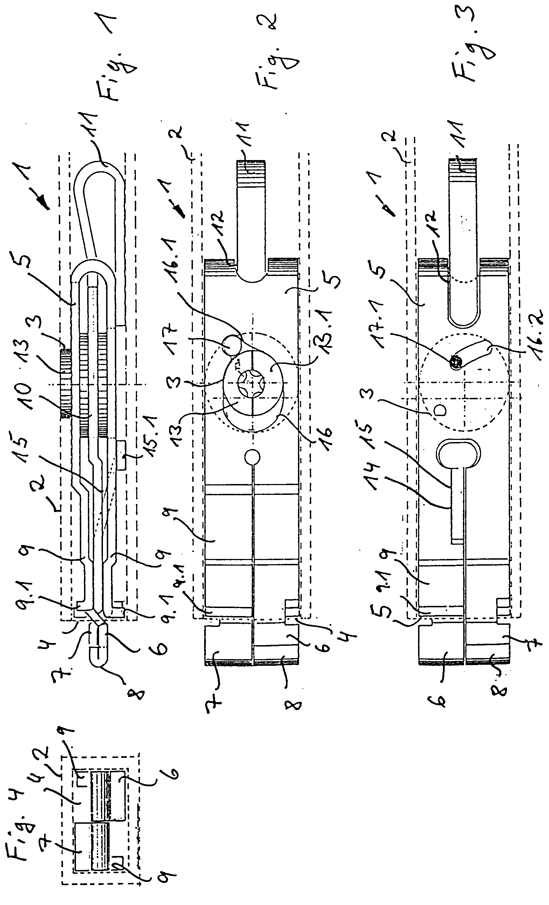

Das Spannschloß umfaßt eine Klemmfeder 5 mit Klemmfingern 6 und 7, die in dem Ausführungsbeispiel nach Fig. 1 vorne um 180° gebogene Klemmkrallen 8 aufweisen. Zudem hat die Klemmfeder 5 Blockierfinger 9, die an ihren vorderen Enden orthogonal abgewinkelte Blockieransätze 9.1 haben. Zwischen den Klemmfingern 6 und 7 und den Blockierfingern 9 ist ein allgemein mit 10 bezifferter Schieber angeordnet. Dieser Schieber ist in der Spannausgangsstellung (Fig. 1 bis 4) vorderseitig zwischen den Blockierfingern nahe an den Enden der Klemmfinger 6 und 7 gelegen. Endseitig hat der Schieber 10 einen zunächst leicht ansteigenden Endbereich und ist dann um 180° gebogen ausgebildet mit einem freien Ende, so daß an dem Ende an dem Schieber ein Federzungenelement 11 ausgebildet ist.

Wie insbesondere auch die Fig. 2 und 3 veranschaulichen, ist das ebenfalls endseitig um 180° gebogene Federelement 5 mit einer Ausnehmung 12 ausgebildet, die im unteren Bereich der Klemmfeder (Fig. 3) soweit reicht, daß das Federzungenelement 11 in der Spannausgangsstellung gemäß den Fig. 1 bis 4 die Ausnehmung durchgreifen kann. In der Spannausgangsstellung ist das Federelement 5 dann über den in der Rastausnehmung mit seinem oberen Ende gelegenen, allgemein mit 13 bezifferten Mitnehmer eindrückbar, wobei das Federzungenelement 11 in die Ausnehmung 12 eintaucht. Dadurch ist es möglich, zunächst das Federelement mitsamt dem Schieber 10 in die Öffnung 4 des Hohlprofils 2 einzubringen. Sobald das Spannschloß 1 eine Lage eingenommen hat, in der der obere Teil des Mitnehmers 13 mit der Rastausnehmung 3 fluchtet, wird der Mitnehmer 13 aufgrund der Hubkraft des Federelementes 11 in die Rastausnehmung 3 gedrückt.

Wie die Fig. 2 und 3 näher veranschaulichen, ist das Federelement 5 im Bereich der Federfinger 6 und 7 und der Blockierfinger 9 geschlitzt ausgebildet, so daß parallel nebeneinander einerseits ein Blockierfinger 9 und andererseits ein Klemmfinger 6 bzw. 7 angeordnet ist. Im unteren Schenkel der Klemmfeder 5, d.h. also im Bereich des unteren Klemmfingers 7, ist zudem noch eine Ausnehmung 14 ausgebildet, in die ein weiteres,am Schieber 10 im vorderen Bereich ausgebildetes Federzungenelement 15 eintauchen kann. Wie insbesondere aus Fig. 1 ersichtlich, erstreckt sich dieses von einem vorderen Bereich des Schiebers 10 zunächst schräg bis unten zum unteren Bereich des Hohlprofils 2 hin und ist dort mit einem abgewinkelten Gleit- und Arretierstück 15.1 ausgebildet. Dieses weitere Federelement 15 taucht beim Einführen des Spannschlosses in die Formausnehmung 14 ein und sorgt auch in diesem Bereich dafür, daß der Mitnehmer bei Erreichen der Rastausnehmung 3 in diese gebracht wird.

Der Mitnehmer seinerseits ist im oberen Bereich mit einer kreisrunden Mitnehmerscheibe ausgebildet. Das Federelement 5 hat seinerseits eine Mitnehmerkulisse 16 mit einer Kurvenbahn 16.1, die an ihrem abgerundeten Endbereich eine Verriegelungsendstellung für einen Mitnehmerbolzen 17 darbietet. Im unteren Schenkel der Klemmfeder 5 ist eine weitere Kurvenbahn 18 ausgebildet, in die ebenfalls ein Mitnehmer 17.1 eintaucht. Im Bereich des Schiebers 10 hat der Mitnehmer 13 seinerseits eine zunächst halbkreisförmige, dann einen kurvenbahnförmigen Verlauf mit Verriegelungsendbereich ausgebildende Mitnehmerkulisse 18 (Fig. 10). Diese Mitnehmerkulisse mit der nasenförmigen Anformung 18.1 ist in der einer Formausnehmung 19 des Schiebers 10 angeordnet.

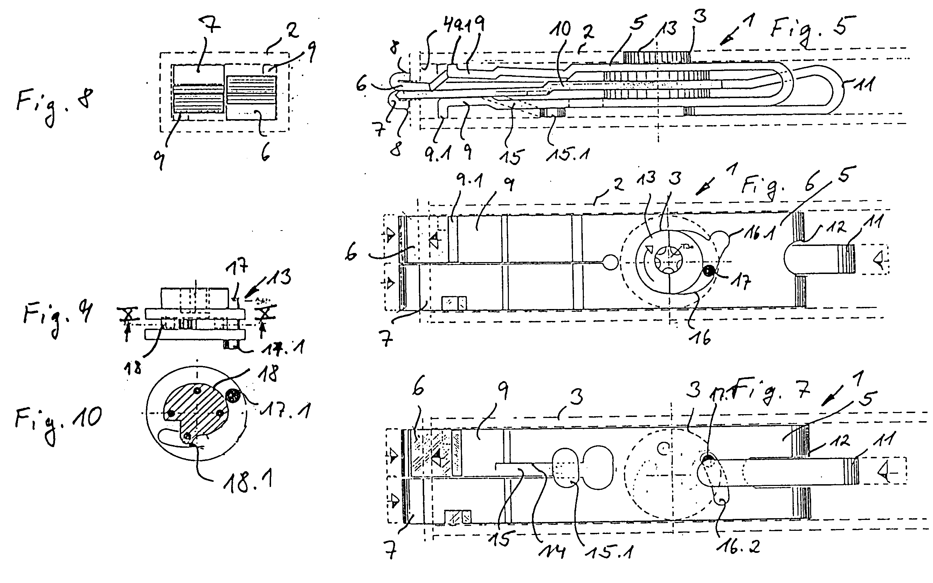

Nach Einführen des Spannschlosses 1 in eine Lage gemäß Fig. 1 ist durch Verdrehen des Drehknopfes des Mitnehmers 13 über die Mitnehmerkulisse 18 und über die Mitnehmerbolzen 17.1, 17 der Schieber 10 in eine Lage zu überführen, wie dies in den Fig. 5 bis 7 veranschaulicht ist. Dabei werden die Klemmfinger 6 und 7 sowie die Blockierfinger 9 in ihre Spannendstellung bzw. Blockierendstellung überführt. Dabei überfahren aufgrund der Bewegung des Schiebers nach vorn die Federzungenelemente 11 und 15 bzw. 15.1 die Klemmfeder 5, so daß die Enden des ersten Federelementes 11 und des weiteren Federelementes 5 die Klemmfeder übergreifen und in einem Bereich außerhalb der zugeordneten Formausnehmung 12 bzw. 14 gelegen sind und daher Stützauflager für die Klemmfeder am Hohlprofil 2 ausbilden. In der Spannausgangsstellung ist daher aufgrund des Überfahrens der Federzungenelemente ein Eindrücken des Mitnehmers in der Rastausnehmung nicht mehr möglich. Durch die zusätzliche Blockierung durch die Blockierfinger 9 bzw. 9.1 und die Verrastung des Mitnehmers 13 in der Rastausnehmung 3 ist das Spannschloß ohne das Erfordernis irgendwelcher sonstiger bauaufwendiger Gehäuseteile sicher in dem Hohlprofl 2 befestigt. Gleichfalls liegen die Mitnehmerteile wie Kulisse 18,18.1 mitsamt den zugehörigen Verriegelungsbolzen in den Endbereichen der Kurvenbahnen der Minehmerkulissen bzw. Formausnehmungen an, so daß definierte Endstellungen gebildet sind mit sicherer Verrastung bzw. Arretierung. Die erforderliche translatorische Bewegung des Schiebers und damit ein Spannen der Klemmfeder 5 ist mit einem relativ geringen Kraftaufwand zu vollziehen, wobei durch die Kurvenbahn der jeweiligen Mitnehmerkulissen eine entsprechende Übersetzung der Drehbwegung in die translatorische Schieberbewegung ermöglicht ist.

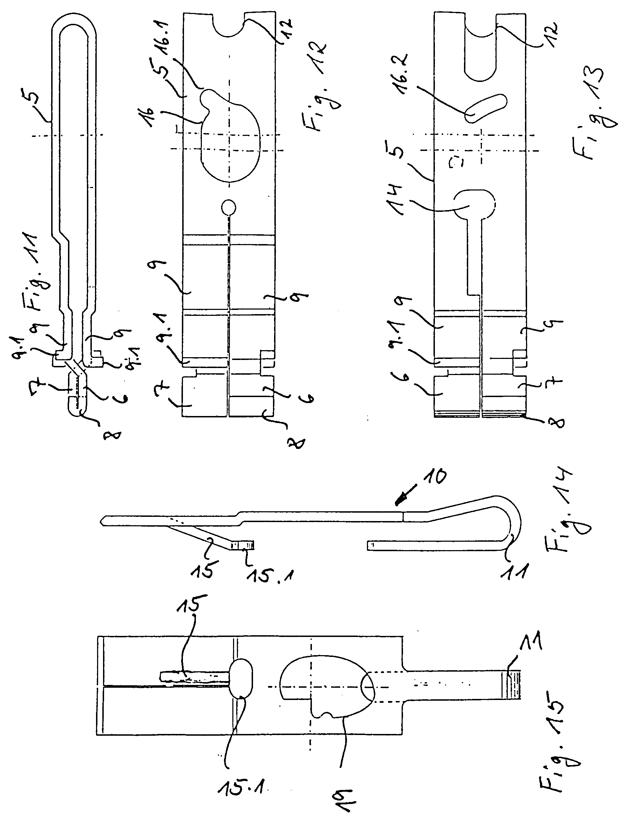

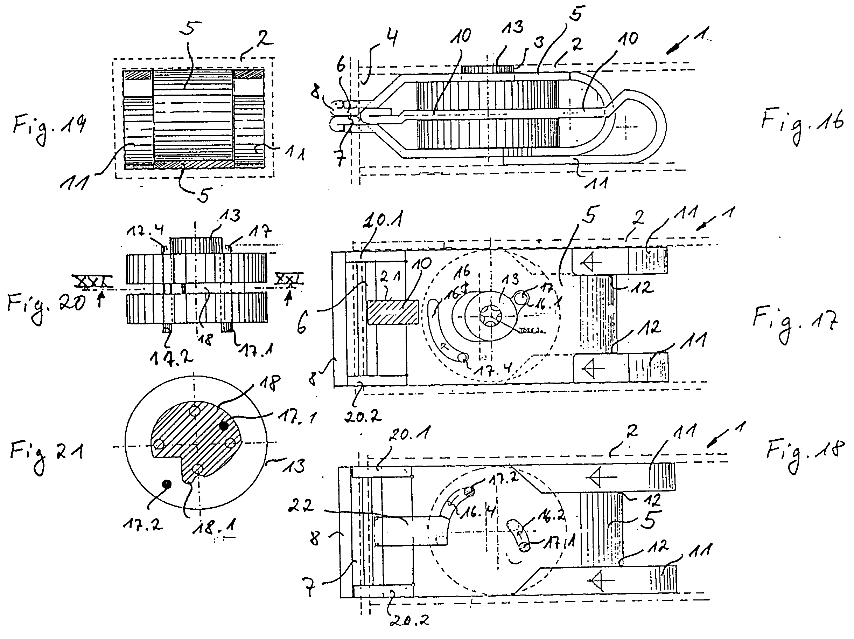

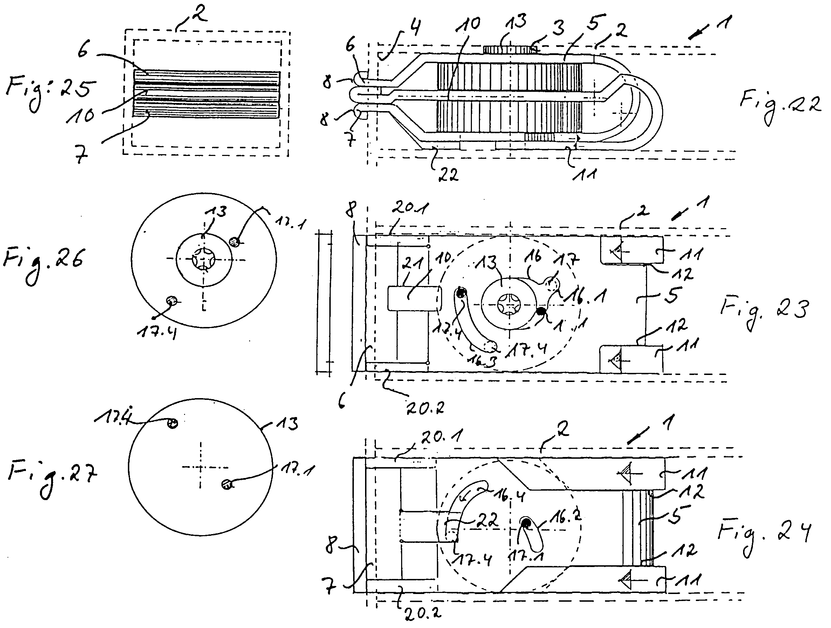

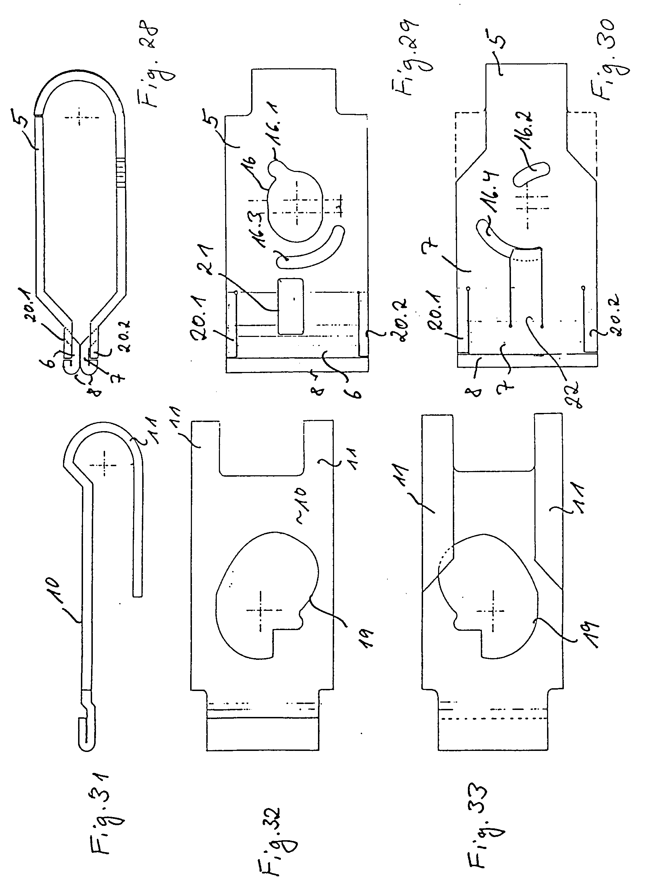

Die Fig. 16 bis 33 zeigen jeweils in analoger Darstellung zu den Fig. 1 bis 15 ein alternatives Ausführungsbeispiel eines Spannschlosses 1 nach der Erfindung. Bei diesem Ausführungsbeispiel hat das Federelement 5 jeweils an den seitlichen Außenbereichen jeweils zwei Formausnehmungen 12, wobei der Schieber 10 endseitig ebenfalls zwei im jeweiligen Außenbereich angeordnete Federzungenelemente 11 hat, die in der Spannendstellung das Federelement 5 überfahren (Fig. 22/24).

Die Klemmfeder 5 hat zudem an beiden Außenseiten des oberen und unteren Klemmfingers 6 bzw. 7 jeweils eine Führungsfeder 20.1 und 20.2, die durch Ausstanzung des Vorderbereiches der Klemmfeder hergestellt sind. Diese Führungsfedern 20.1 bzw.20.2 werden über den Schieber 5 im Verlaufe der Spannbewegung nicht ausgelenkt, daß sich das jeweilige Klemmfederelement über die Führungsfeder an den Innenflächen des Hohlprofils 2 abstützen kann. Zudem ist der obere Klemmfinger 6 mit einer Formausnehmung 21 ausgebildet. In dem unteren Klemmfinger 7 dagegen ist eine durch Ausstanzung hergestellte Auflauffeder 22 vorgesehen, die den unteren Federfinger am Hohlprofil 2 abstützen kann.

Bei diesem Ausführungsbeispielen sind die die Kurvenbahnen umfassenden Mitnehmerkulissen bzw. die Kurvenbahnen in der Klemmfeder 5 gleichfalls anders gestaltet als bei dem Ausführungsbeispiel nach den Fig. 1 bis 15. Hier ist neben der die Mitnehmerkulisse mit ihrer Kurvenbahn ausbildenden Formausnehmung 16 mit Ansatz 16.1 noch eine zusätzliche Kurvenbahn 16.3 im oberen in den Mitnehmerfinger 6 übergehenden Bereich der Klemmfeder 5 ausgebildet. Im unteren Bereich der Klemmfeder (Fig. 30) sind zwei Kurvenbahnen 16.2 sowie 16.4 vorhanden. In diese Kurvenbahnen greifen Stifte 17.1 sowie 17.2 ein.

## Patentansprüche

1. Spannschloß (1) zum Verbinden eines mit einer Rastausnehmung versehenen Hohlprofils (2) mit einem einen Klemmrandansatz aufweisenden Trägerelement, insbesondere zum Verbinden von Hohlprofilstangen mit hinterschnittene Nuten als Klemmrandansätze aufweisenden Vertikalstützen von auf- und abbaubaren Gestellen, mit einer in das Hohlprofil /2) einführbaren und über einen Mitnehmer (13) in einer Rastausnehmung (3) des Hohlprofils (2) arretierbaren, durch eine Drehbewegung des Mitnehmers (13) aus einer Spannausgangslage in eine Spannendstellung überführbaren Klemmfeder (5) mit in der Spannendstellung den Klemmrandansatz hintergreifenden Klemmfingern (6,7) , die im Verlaufe der Spannbewegung der Klemmfeder (5) in eine quer zur Klemmfederlängsachse gerichtete Spannspreizstellung bewegbar sind, **dadurch gekennzeichnet**, daß zwischen den Klemmfingern (6,7) der Klemmfeder (5) ein relativ zu dieser translatorisch bewegbarer, zumindest ein Federzungenelement (11) aufweisender Schieber (10) angeordnet ist, über den die Klemmfinger (6,7) aus ihrer Spannausgangsstellung im Verlaufe der Schieberbewegung in ihre Spannspreizstellung überführbar sind, daß die Klemmfeder (5) und der Schieber (10) jeweils eine eine Kurvenbahn umfassende Mitnehmerkulisse (16,16.1,16.2,16.3,16.7,19) aufweisen, in die zumindest ein am Mitnehmer (13) festgelegtes Mitnehmerstück (17,17.1,17.2,17.3,17.4, 18,18.1) zur Bewegungskopplung eingreift, und daß die Klemmfeder (5) eine dem Federzungenelement (11) zugeordnete Formausnehmung (12) aufweist sowie von diesem im Verlaufe der Schieberbewegung zur Spannschloßarretierung in dem Hohlprofil (2) überfahrbar ist.

2. Spannschloß nach Anspruch 1, **dadurch gekennzeichnet**, daß der Schieber (10 an seinem im montierten Zustand den Klemmfingern (6,7) abgewandten Ende ein durch einen um etwa 180° gebogenen, federnden Endbereich gebildetes Federzungenelement (11) hat, wobei die Klemmfeder (5) von dem Federzungenelement (11) übergreifbar ist.

3. Spannschloß nach Anspruch 2, **dadurch gekennzeichnet**, daß im wesentlichen koaxial zur Längsachse des Schiebers (10) das Federzungenelement (11) vorgesehen ist.

4. Spannschloß nach Anspruch 1 oder 2, **dadurch gekennzeichnet**, daß der Schieber (11) zwei in seinen Seitenaußenbereichen angeordnete Federzungenelemente (11) hat.

5. Spannschloß nach einem der Ansprüche 1 bis 4, **dadurch gekennzeichnet**, daß der Schieber zusätzlich zu endseitig vorgesehenen Federzungenelementen (11) ein weiteres Federzungenelement (15,15.1) hat, das zwischen seiner Mitnehmerkulisse und seinem dem Klemmfinger (6,7) zugewandten vorderen Ende angeordnet ist.

6. Spannschloß nach Anspruch 5, **dadurch gekennzeichnet**, daß das weitere Federzungenelement (15,15.1) als am Hohlprofil (2) federnd abstützbares Gleit- und Arretierstück ausgebildet ist.

7. Spannschloß nach Anspruch 5 oder 6, **dadurch gekennzeichnet**, daß die Klemmfeder (5) eine dem weiteren Federzungenelement (15,15.1) zugeordnete Formausnehmung (14) hat.

8. Spannschloß nach einem der Ansprüche 1 bis 7, **dadurch gekennzeichnet**, daß die Klemmfeder (5) an ihrem den Klemmfingern (6,7) abgewandten Ende um etwa 180° gebogen ausgebildet ist und in dem umgebogenen Endbereich zumindest eine Ausnehmung (12) zum Durchtritt des Federzungenelements (11) hat.

9. Spannschloß nach einem der Ansprüche 1 bis 8, **dadurch gekennzeichnet**, daß die Klemmfeder (5) neben ihren beiden Klemmfingern (6,7) jeweils einen einem Klemmfinger (6,7) in Nebeneinanderanordnung zugeordneten, von dem Schieber (10) in Klemmstellung im Hohlprofil überführbaren Blockierfinger (9) hat.

10. Spannschloß nach einem der Ansprüche 8 oder 9, **dadurch gekennzeichnet**, daß in der Klemmfeder in einem unteren Schenkel zumindest eine Kurvenbahn (16.2) als Mitnehmerkulisse und in einem oberen Schenkel eine im wesentlichen ovale Formausnehmung (16) zur Anordnung eines am Mitnehmer (13) ausgebildeten Drehknopfes (19) ausgebildet ist, wobei die Formausnehmung (16) eine Kurvenbahn (16.1) mit Verriegelungsbereich aufweist, und daß in die Kurvenbahn (16) des unteren Schenkels und in die Formausnehmung (16.1) mit dem Verriegelungsbereich (16.1) am Mitnehmer festlegbare Mitnehmerbolzen (17.,17.1) zur Bewegungskopplung einführbar sind.

11. Spannschloß nach Anspruch 10, **dadurch gekennzeichnet**, daß der obere Schenkel der Klemmfeder (5) neben der Formausnehmung (16) eine weitere Kurvenbahn und der untere Schenkel neben der ersten Kurvenbahn (16.2) eine zweite Kurvenbahn (16.4) zur Anordnung eines weiteren am Mitnehmer festlegbaren Mitnehmerbolzens (17.4) aufweist.

12. Spannschloß nach einem der Ansprüche 1 bis 11, **dadurch gekennzeichnet**, daß der Mitnehmer ein in eine die Mitnehmerkulisse des Schiebers bildende Formausnehmung (19) einsetzbares Mitnehmerstück (18) mit einer nasenförmigen Anformung (18.1) aufweist.

13. Spannschloß nach einem der Ansprüche 1 bis 12, **dadurch gekennzeichnet**, daß die Federfinger (6,7) an ihren vorderen Klemmenden abgekröpft ausgebildet sind.

14. Spannschloß nach einem der Ansprüche 1 bis 13, **dadurch gekennzeichnet**, daß die Klemmfeder (5) mit jeweils einem oberen und einem unteren Klemmfinger (6,7) mit jeweils einer vorderen zentralen Klemmkralle (8) ausgebildet ist und sich im Bereich hinter der Klemmkralle an beiden seitlichen Außenbereichen der Klemmfeder (5) jeweils eine Führungsfeder (20.1,20.2) anschließt.

15. Spannschloß nach Anspruch 14, **dadurch gekennzeichnet**, daß die Führungsfedern (20.1,20.2) durch Stanzung der Klemmfeder (5) gebildet sind.

16. Spannschloß nach einem der Ansprüche 1 bis 15, **dadurch gekennzeichnet**, daß an einem unteren Klemmfinger (7) eine an dem Hohlprofil (2) abstützbare Auflauffeder (7) ausgebildet ist.

17. Spannschloß nach Anspruch 16, **dadurch gekennzeichnet**, daß die Auflauffeder (22) durch Stanzung des Klemmfingers (7) gebildet ist.
